## Europäisches Patentamt

## European Patent Office

## Office européen des brevets

(11) Publication number: **0 067 287**
**B1**

(12) **EUROPEAN PATENT SPECIFICATION**

(45) Date of publication of patent specification: **29.07.87**  (51) Int. Cl.⁴: **F 16 D 65/60**

(21) Application number: **82103308.1**

(22) Date of filing: **20.04.82**

(54) **Automatic brake adjusting mechanism.**

(30) Priority: **15.06.81 US 273537**

(43) Date of publication of application:
**22.12.82 Bulletin 82/51**

(45) Publication of the grant of the patent:
**29.07.87 Bulletin 87/31**

(84) Designated Contracting States:
**DE FR GB IT SE**

(56) References cited:
**DE-A-1 605 279**
**DE-A-2 132 611**
**FR-A-1 445 242**
**FR-A-2 019 007**
**FR-A-2 370 615**
**FR-A-2 393 194**
**GB-A-1 054 364**
**US-A-3 949 840**

(73) Proprietor: **Rockwell International Corporation
600 Grant Street
Pittsburgh Pennsylvania 15219 (US)**

(72) Inventor: **Cumming, James Charles
25 Woodside Park
Pleasant Ridge Michigan 48069 (US)**

(74) Representative: **Leiser, Gottfried, Dipl.-Ing. et al
Patentanwälte Prinz, Leiser, Bunke & Partner
Manzingerweg 7
D-8000 München 60 (DE)**

Courier Press, Leamington Spa, England.

## Description

This invention is directed to an automatic brake adjusting mechanism for a vehicle brake assembly which automatically adjusts for brake shoe lining wear in response to movement of the brake shoes beyond a predetermined distance. More specifically, the invention is directed to mechanism which permits the automatic adjusting mechanism to be readily disengaged without disassembling component parts thereof.

One such automatic adjusting mechanism which employs a pawl and ratchet responsive to overtravel of a cam brake actuating lever on the brake application stroke to effect automatic slack adjustment upon return movement of the lever is disclosed in US—A—3,949,840 corresponding to the preamble of claim 1. That lever and automatic adjusting mechanism, as well as other mechanisms used for the same purpose, incorporates means for manually adjusting the brake actuating lever relative to the cam shaft. In the automatic adjusting mechanism disclosed in the above-referenced patent, the orientation of the teeth provided to the pawl permits rotation of the ratchet member to move or position the brake shoes closer to the brake drum and thereby adjust for lining wear. However, the orientation of the teeth on the pawl prevents rotation of the ratchet member in the opposite direction and must be disengaged when the manual means is employed to move or reposition the brake shoes further away from the brake drum. The pawl may be removed from the assembly to permit movement of the brake shoes away from the brake drum; but the parts are relatively small and may be misplaced, lost or improperly reinstalled when such removal is attempted in the field.

The brake actuator motors may also be provided with spring type auxiliary or safety brake mechanisms such as that disclosed in US—A—3,020,094. Such auxiliary or safety brake mechanisms utilize a spring normally compressed to an inoperative position by brake system air pressure which expands and moves the actuating lever to apply the brake in the absence of brake system air pressure. Such devices are useful as parking brake mechanisms when the vehicle is not being operated and function as emergency or safety brake mechanisms in the event the vehicle loses its brake system air pressure when in operation. Such devices pose a problem, however, when they are active as an auxiliary, parking brake on a vehicle such as a trailer which does not have its own source of air pressure to release the spring. This may occur with a trailer separated from its towing vehicle and parked along side a highway or in a truck, railroad or ship terminal yard when it becomes necessary to shuttle the trailer; as for example, to load it on a railroad flat car or ship.

FR—A—2,393,194 discloses a braking cylinder of a railroad waggon braking system equipped with a brake adjusting mechanism including a ratchet and pawl assembly. One end of the pawl extends out of a bore wherein the pawl is slidingly received. This end of the pawl is engaged by an operating lever permitting the pawl to be manually disengaged from the ratchet.

The present invention avoids certain of the foregoing problems of the prior art by providing in an automatic slack adjusting mechanism means for readily disengaging a spring biased pawl engaged with helical teeth provided to a ratchet member to manually move or reposition a brake shoe relative to a surrounding brake drum without disassembling component parts of the automatic adjusting mechanism.

In accordance with the invention, a brake adjusting mechanism is provided as defined in claim 1, and a preferred embodiment thereof is indicated in claim 2.

Further details will stand out from the following description of an embodiment of the invention with reference to the drawings wherein:

Figure 1 is a side elevation partly in section of a cam actuated vehicle brake assembly;

Figure 2 is a top plan view of the vehicle brake assembly of Figure 1;

Figure 3 is a view taken on the line 3—3 of Figure 2;

Figure 4 is an enlarged elevation view of the lever and automatic slack adjusting mechanism of the present invention with part of the mechanism housing broken away for clarity of illustration;

Figure 5 is a sectional view taken on the line 5—5 of Figure 4.

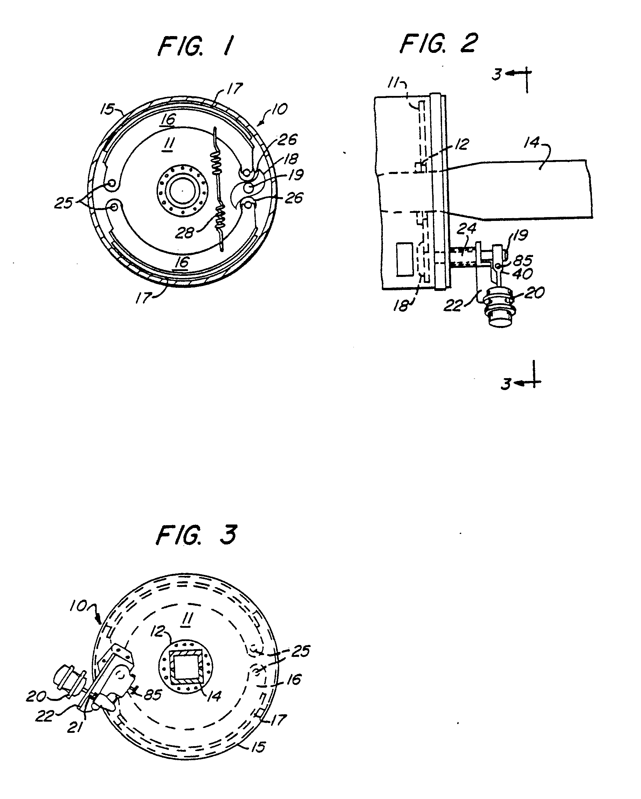

In Figures 1—3, the present invention is shown in combination with a cam actuated brake assembly 10 supported by a spider 11 secured to a flange 12 which in turn is welded to a vehicle axle 14. The brake assembly 10 is comprised of a brake drum 15, a pair of brake shoes 16, a brake actuating cam 18 non-rotatably secured to a camshaft 19, a spring brake actuating motor 20 having a reciprocating brake actuating rod 21 and a lever 40 operatively connecting the brake actuating rod 21 and the camshaft 19. The brake shoes 16 are each respectively provided with friction linings 17.

The actuating motor 20 is supported by an angle bracket 22 secured as by welding to one end of a tube 24. The tube 24 is welded at its other end to a mounting bracket secured to the spider 11 and encloses a length of the camshaft 19.

The brake shoes 16 are each respectively mounted for pivotal movement about a pin 25 fixed to the spider 11. The opposite ends of the brake shoes 16 are provided with roller followers 26 biased into engagement with an S-type brake actuating cam 18 by a spring 28.

The brake assembly 10 as thus far described is well known in the art and is normally operated by depressing the vehicle brake pedal which supplies fluid pressure usually air, to the service chamber of the actuating motor 20. Air pressure is independently supplied to the auxiliary brake chamber to compress the spring brake while the vehicle is in operation and has brake air pressure. The fluid pressure operating on a piston or diaphragm in the service chamber of motor 20 forces the actuating rod 21 outwardly of the motor housing thereby rotating the lever 40 and camshaft 19 counterclockwise as viewed in Figure 3 about the axis of the camshaft 19. The camshaft 19 rotates the brake actuating cam 18 in a clockwise direction as viewed in Figure 1. Rotary movement of the cam 18 as transmitted through the roller followers 26 forces the brake shoes 16 to pivot about the pins 25 until the brake shoe linings 17 are pressed into frictional contact with the brake drum 15. When the brakes are released, fluid pressure is exhausted from the service chamber of actuator motor 20 and the actuating rod 21 and lever 40 are returned to their normally retracted positions as shown in Figure 3. When the fluid pressure is exhausted from the service chamber of actuating motor 20, the brake shoes 16 and the linings 17 are returned by spring 28 to their normal running position as shown in Figure 1 where a clearance space is provided between the linings 17 and the brake drum 15. The spring 28 acting through the brake shoes 16 and roller followers 26 also assists in returning the cam 18, camshaft 19 and lever 40 to their normal non-braking position as shown in Figures 1—3.

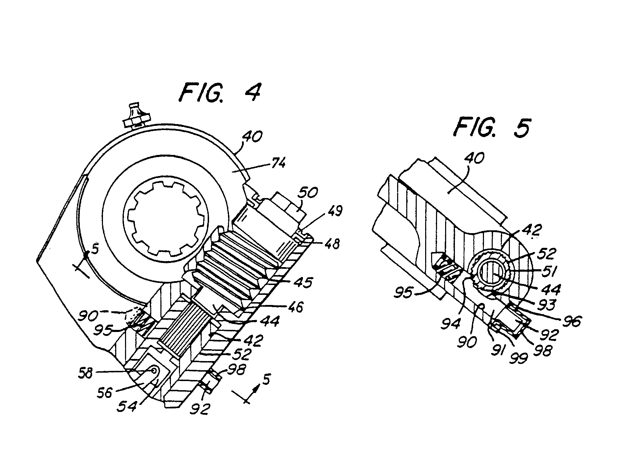

The invention will now be described with particular reference to Figures 4 and 5 where the lever 40 and the automatic slack adjusting mechanism are shown in detail.

The lever 40 is an elongated housing having an opening adjacent one end and a bore 42 extending partially along the length of the housing. A shaft 44 having a worm 45 formed integral therewith is rotatably mounted in the bore between a shoulder 46 and retaining ring 48. A seal 49 is provided axially outward of the retaining ring 48. The internal surfaces of the ring 48 and the shoulder 46 provide radial bearing surfaces for the worm 45. The end of the shaft 44 axially outward of the worm seal 49 is formed as a square driving head 50 to provide an externally accessible means for manually rotating the shaft. The opposite end of the shaft 44 extends beyond the shoulder 46 and has a longitudinally movable rotary driving splined connection internally of a or ratchet member 51 provided in the form of a hollow cylinder. The exterior surface portion of the ratchet member concentric with the interior splined connection to the shaft 44 is provided with a plurality of circumferentially spaced, axially extending helical teeth 52.

A piston 54 is freely slidably disposed within the interior of ratchet member 51. The hollow interior of the ratchet member 51 is provided with a circumferentially extending groove axially outward of the piston 54. A retaining ring 57 is fitted to a groove to prevent the piston 54 from being withdrawn from the ratchet member and to provide a piston engaging abutment for moving the ratchet member axially outward of the bore 42 in response to axially outward movement of the piston 54 beyond a predetermined distance.

The piston 54 is diametrically slotted to receive the flat end 56 of a rod 55 pivotally connected to the piston 54 by a pin 58. The opposite end of the rod 55 is pivotally connected to the bifurcated end of a clevis. The opposite end of the clevis is provided with an internally threaded bore which receives the threaded end of the brake actuating rod 21.

A second bore 90 is provided which not only communicates with the first bore 42 but traverses or extends laterally on both sides of the first bore 42. An elongate release pin 91 is disposed partly within the second bore 90 with one end 92 extending axially out of the bore 90. The pin 91 is undercut at 93 to provide clearance for the cylindrical surface of the ratchet member 51 and the helical teeth 52. The axially inner end of the undercut 93 is machined to provide a plurality of buttress teeth 94 for engagement with the helical teeth 52 of ratchet member 51. The intermediate undercut portion 93 of pin 91 traverses the ratchet member 51 with the buttress teeth 94 forming a pawl on one side of the axis of ratchet member 51 and the end 92 of pin 91 extending out of the second bore 90 on the other side of the axis of ratchet member 51. A spring 95 is seated at one end in abutment with the inner end of the second bore 90 and seated at its opposite end against the axially inner end surface of the release pin 91 to bias the pin, and more specifically, the buttress teeth 94 into engagement with the helical teeth 52 provided to the cylindrical outer surface of the ratchet member 51.

The second bore 90 is counterbored to provide an annular recess 96 concentric with the outer end 92 of release pin 91. A deformable protective cap 98, closed at one end and having a flange seated in the recess 96 prevents moisture and debris from entering the second bore 90. The deformable protective cap 98 may be formed from any suitable flexible material and in the disclosed embodiment is comprised of a rubber cap 98 having an annular metal ring 99 sized to provide an interference fit between the cap flange and the recess 96.

The embodiment of disclosed above may be utilized to move or "back off" the brake shoes 16 relative to the brake drum 15 by mutually pressing the deformable protective cap 98 and thereby moving the outer end 92 of release pin 91 to compress the spring 95 and disengage the pawl teeth 94 from the helical teeth of ratchet member 51. The brake shoes may then be backed away from the brake drum by manual rotation of a wrench applied to the square driving head 50 of shaft 44.

As best shown in Figure 4, the teeth of the worm 45 provide a threaded connection with the teeth of the worm gear 74. Rotary movement of the shaft 44 and the worm 45 in the bore 42 will rotate the worm gear 74 and the camshaft 19 relative to the lever 40 and move or position the brake shoes 16 relative to the brake drum 15. Since the worm 45 is fixed by shoulder 46 and retaining ring 48 against axial movement in the bore 42, the worm 45 also functions as a stationary part of the lever 40 and rotates the worm gear 74 and camshaft 19 when the lever 40 is pivoted about the axis of the camshaft 19 by the actuating rod 21 and clevis.

Automatic slack adjustment is effected by operation of the shaft 44, worm 45, ratchet member 51, piston 54 and the rod 55 pivotally connecting the piston 54 to the lever 40. Axial movement of the actuating rod 21 in a brake applying direction moves the clevis and lever 40 counterclockwise, as viewed in Figures 3 and 4, about the axis of the camshaft 19. During such movement, the piston 54 is moved outward relative to the ratchet member 51 and bore 42. The spacing or distance provided between the piston 54 and its retaining ring permits the piston 54 to move freely within that axial length of the ratchet member. This distance is calculated relative to the arcuate movement of the camshaft 19 which is required to take up the normal running clearance desired between the brake lining 17 and the brake drum 15 and a substantial portion of that arcuate movement which produces distortion in the brake assembly. The remaining arcuate movement producing distortion in the assembly and the lining wear allowable before automatic adjustment is to be effected are accommodated by the axial length of each of the buttress teeth 94. Thus, as long as the brake linings 17 have not experienced appreciable wear, the piston 54 will abut the its retaining ring and move the ratchet member 51 outward relative to the bore 42 and pawl teeth 94. After an acceptable amount of lining wear, the ratchet member 51 moving relative to the spring biased pin 91 will cause the pin 91 to retract and engage an adjacent set of helical teeth 52 on the ratchet member 51. When the service brake is released, the lever 40 and ratchet member 51 return to the normal position as shown in Figure 4 and the buttress teeth 94 of the pin 91 rotate the ratchet member 51, shaft 44 and worm 45 to effect a predetermined arcuate movement of the worm gear 74 and camshaft 19. This will effect a slight rotary adjustment of the S-type actuating cam 18 as shown in Figure 1 and reposition the brake shoes 16 outwardly until the desired running clearance is again established between the linings 17 and the brake drum 15.

To manually adjust the mechanism to reposition or move the brake shoes 16 away from the surrounding brake drum 17, one need only push on the end 92 of pin 91 thereby compressing the spring 95 and withdrawing the buttress teeth 94 from engagement with the helical teeth 52 on the ratchet member 51. Once the pin 91 is disengaged from the ratchet member 51, a wrench can be applied to rotate the square driving head 50 and the worm 45 which in turn will rotate the worm gear 74 and camshaft 19 in a clockwise direction as shown in Figures 3 and 4 to move or "back off" the brake shoes relative to the brake drum 15. This is important, for example, when it is necessary to move a vehicle such as a trailer equipped with a spring brake actuator motor and parked at a railway or truck terminal or on dockside without a source of air pressure to compress the spring and release the auxiliary parking brake. In such an instance, an attendant can push on the end of pin 94 and back off the brake shoes by rotating the square driving head 50 as described above to permit movement of the vehicle without disassembling the automatic adjusting mechanism.

The foregoing cam actuating lever and automatic slack adjusting mechanism has been described in combination with an S-type oscillating rotary cam actuated drum type brake system. The actuating lever and automatic adjusting mechanism is not limited to use in a drum type brake system but may be used in combination with other cam actuated brake systems employing an actuating lever; for example, a cam actuated disc type brake system or in a wedge actuated brake system utilizing a pawl and ratchet automatic adjusting mechanism.

The foregoing description is to be considered as illustrative and not restrictive, the scope of the invention being defined by the appended claims, and all changes which come within the meaning and range of equivalency of the claims are therefore intended to be embraced thereby.

**Claims**

1. An automatic brake adjusting mechanism for a vehicle brake assembly having a movable brake shoe (16) with a friction lining (17) adapted to engage a surrounding brake drum (15);

a housing (40) having a first bore (42);

a ratchet member (51) slidably and rotatably mounted in said first bore (42), said ratchet member (51) having helical teeth (52) about a generally cylindrical outer surface thereof and a threaded connection with adjusting-means (44) operative to position the brake shoe (16) relative to the surrounding brake drum (15);

a second bore (90) in said housing (40) and communicating with said first bore (42);

an elongate element (91) mounted for rectilinear movement in said second bore (90), said elongate element (91) having a pawl (94) engaged with said helical teeth (52) of said ratchet member (51); and

biasing-means (95) biasing said pawl (94) into engagement with said ratchet member (51), said pawl (94) being adapted to be disengaged manually from said ratchet member (51);

characterized in that one end (92) of said elongate element (91) extends out of said second bore (90), in that said second bore (90) transverses said first bore (42), an intermediate portion of said elongate element (91) transverses said ratchet member (51), said pawl (94) is disposed on one side of said ratchet member (51) and said one end (92) of said elongate element (91) is disposed on the other side of said ratchet member (51), said pawl (94) being formed as an integral part of said elongate element (91) and said biasing means (95) comprising a spring (95) seated at one end against an abutment internal of said second bore (90) and seated at its other end against said elongate element (91), and in that the disengagement of said pawl (94) is achieved by manually pressing on said one end (92) of said elongate element (91) against said biasing means (95).

2. The brake adjusting mechanism defined by Claim 1 including a deformable protective cap (98) seated in said second bore (90) and enclosing said one end (92) of said elongate element (91) whereby said elongate element is movable by manually depressing said protective cap.

**Patentansprüche**

1. Selbsttätige Bremsnachstellvorrichtung für eine Fahrzeugbremseinheit, mit einem beweglichen Bremsschuh (16), dessen Reibbelag (17) an einer umgebenden Bremstrommel (15) anliegen kann;

einem Gehäuse (40) mit einer ersten Bohrung (42);

einem Ratschenelement (51), das verschiebbar und drehbar in der ersten Bohrung (42) gelagert ist, wobei das Ratschenelement (51) schräg verzahnte Zähne (52) um eine im allgemeinen zylindrische Außenfläche desselben und eine Schraubverbindung mit Einstellvorrichtungen (44) aufweist, die dazu dienen, den Bremsschuh (16) bezüglich der umgebenden Bremstrommel (15) zu positionieren;

einer zweiten Bohrung (90) im Gehäuse (40), die mit der ersten Bohrung (42) in Verbindung steht;

einem längs ausgedehnten Element (91), das zur geradlinigen Bewegung in der zweiten Bohrung (90) angebracht ist, wobei das längs ausgedehnte Element (91) eine Klinke (94) hat, die mit den schräg verzahnten Zähnen (52) des Ratschenelements (51) ineinandergreift; und

Vorspannmitteln (95), die die Klinke (94) zum Ineinandergreifen mit dem Ratschenelement (51) vorspannen, wobei die Klinke (94) manuell aus dem Eingriff mit dem Ratschenelement (51) gebracht werden kann,

dadurch gekennzeichnet, daß ein Ende (92) des längs ausgedehnten Elements (91) aus der zweiten Bohrung (90) herausreicht, dadurch, daß die zweite Bohrung (90) die erste Bohrung (42) durchquert, ein mittleres Teilstück des längs ausgedehnten Elements (91) das Ratschenelement (51) durchquert, die Klinke (94) auf einer Seite des Ratschenelements (51) liegt und das eine Ende (92) des längs ausgedehnten Elements (91) auf der anderen Seite des Ratschenelements (51) liegt, wobei die Klinke (94) als einheitlicher Bestandteil des längs ausgedehnten Elements (91) geformt ist und die Vorspannmittel (95) eine Feder (95) enthalten, die an ihrem einen Ende gegen ein Widerlager innerhalb der zweiten Bohrung (90) und an ihrem anderen Ende gegen das längs ausgedehnte Element (91) gelagert ist, und dadurch, daß das Ausklinken der Klinke (94) durch manuelles Drücken auf das eine Ende (92) des längs ausgedehnten Elementes (91) gegen die Vorspannmittel (95) erreicht wird.

2. Bremsnachstellvorrichtung nach Anspruch 1, mit einer deformierbaren Schutzkappe (98), die in der zweiten Bohrung (90) sitzt und das eine Ende (92) des längs ausgedehnten Elements (91) abschließt, wobei das längs ausgedehnte Element durch manuelles Herunterdrücken der Schutzkappe beweglich ist.

**Revendications**

1. Mécanisme de réglage automatique de frein pour ensemble de freinage pour véhicule, comportant

— une mâchoire de frein mobile (16) munie d'une garniture de friction (17) adaptée à venir en prise avec un tambour de frein périphérique (15);

— une enveloppe (40) comportant un premier alésage (42);

— un élément à rochet (51) monté de manière coulissante et rotative dans le premier alésage (42), l'élément à rochet (51) ayant une surface extérieure de forme générale cylindrique, des dents hélicoïdales (52) autour de celle-ci et une liaison par filetage avec des moyens de réglage (44) fonctionnant pour positionner la mâchoire de frein (16) par rapport au tambour de frein périphérique (15);

— un second alésage (90) ménagé dans l'enveloppe (40) et communiquant avec le premier alésage (42);

— un élément allongé (91) monté pour avoir un mouvement rectiligne dans le second alésage (90), l'élément allongé (91) comportant un cliquet (94) engrené avec les dents hélicoïdales (52) de l'élément à rochet (51); et

— des moyens de rappel (95), sollicitant le cliquet (94) pour le faire engrener avec l'élément à rochet (51), le cliquet (94) étant adapté à être désengrené manuellement de l'élément à rochet (51);

caractérisé en ce qu'une première extrémité (92) de l'élément allongé (91) s'étend hors du second alésage (90), en ce que le second alésage (90) croise le premier alésage (42), en ce qu'une partie intermédiaire de l'élément allongé (91) croise l'élément à rochet (51), en ce que le cliquet (94) est disposé d'un côté de l'élément à rochet (51), en ce que la première extrémité (92) de l'élément allongé (91) est disposée de l'autre côté de l'élément à rochet (51), le cliquet (94) constituant une partie intégrante de l'élément allongé (91) et les moyens de rappel (95) comprenant un ressort (95) s'appuyant à une de ses extrémités sur une butée interne du second alésage (90) et s'appuyant à son autre extrémité sur l'élément allongé (91), et en ce que l'on désengrène le cliquet (94) en pressant manuellement sur la première extrémité (92) de l'élément allongé (91) à l'encontre des moyens de rappel (95).

2. Mécanisme de réglage de frein conforme à la revendication 1, comprenant un capuchon de protection déformable (98) calé dans le second alésage (90) et enfermant la première extrémité (92) de l'élément allongé (91) de sorte que l'élément allongé soit déplaçable par appui manuel sur le capuchon de protection.

FIG. 1

FIG. 2

FIG. 3

FIG. 4

FIG. 5